Europäisches Patentamt

European Patent Office

Office européen des brevets

(11) Publication number: **0 189 333**
A2

# EUROPEAN PATENT APPLICATION

(21) Application number: 86300535.1

(51) Int. Cl.⁴: **G 01 V 1/135**, G 01 V 1/38

(22) Date of filing: 27.01.86

(30) Priority: 25.01.85 GB 8501954

(43) Date of publication of application: 30.07.86
Bulletin 86/31

(84) Designated Contracting States: FR GB NL

(71) Applicant: **Seismograph Service (England) Limited,
Holwood Westerham Road, Keston Kent, BR2 6HD (GB)**

(72) Inventor: **Breugelmans, Jacobus, Langenfeld Hill Crest
Road, Biggin Hill Kent (GB)**

(74) Representative: **Lynd, Michael Arthur et al, STANLEY,
POPPLEWELL, POOLE 57 Lincoln's Inn Fields, London
WC2A 3LS (GB)**

(54) **Marine seismic transducer.**

(57) There is provided a marine seismic transducer containing a vibration source which comprises a flexible sound-transmitting diaphragm which is arranged to act directly upon the water into which the sound is to be transmitted. Preferably the diaphragm is in the form of a generally cylindrical sleeve, the edges of the sleeve being secured to a body of the transducer. The transducer may be internally pressurized to a pressure equal to or greater than the ambient pressure of surrounding sea-water, e.g. by means of air. Operation of the transducer may be effected hydraulically by means of piston and cylinder arrangements within the transducer adapted to cause flexure of the diaphragm.

EP 0 189 333 A2

- 1 -

MARINE TRANSDUCER

This invention relates to a marine seismic transducer for use in generating sound underwater.

Marine seismic transducers which generate sound by vibration are known but such known transducers have up until now used moving pistons as the active surface area, by which we mean that the moving pistons have acted directly upon the water into which the sound is to be transmitted. It is reported that such transducers can produce excessive pressures due to concentrated flow paths and that the efficiency of the transducers is reduced because of cavitation and swirling.

U.S. Patent Specification No. 3676840 discloses a marine seismic transducer provided with two signal-radiating hollow shells interconnected by a hydraulic cylinder for causing relative outward movement between the shells, the edges of the shells being connected to each other by means of a flexible hollow torus pressurized to a pressure slightly greater than the external pressure plus the difference in pressures internally and externally of the transducer. The torus is not intended to and does not function as the vibration source.

According to the present invention there is provided a marine seismic transducer in which there is provided a vibration source which comprises a flexible sound-transmitting diaphragm which is arranged to act directly upon the water into which the sound is to be transmitted.

Preferably the diaphragm is in the form of a generally cylindrical sleeve, the edges of the sleeve being secured to a body of the transducer. By adopting a generally cylindrical sleeve as the diaphragm a large active surface area can be created. The power required to transmit a sound wave through the water is proportional to the square of the active surface area and thus, in the case of a conventional prior art marine transducer, is proportional to $\pi/4 \times D^2$ where D is the diameter of the piston or to $2 \times \pi/4 D^2$ when two opposed pistons are employed. It will readily be appreciated that by employing a generally cylindrical sleeve of the same diameter and having a length equal to its diameter the active surface is twice that of such opposed pistons.

Other advantages arise from the generally cylindrical sleeve construction. In particular it becomes possible to streamline the transducer more effectively, which will thus reduce the possibility of cavitation occuring. Moreover, because it is a pressure wave rather than a velocity wave which is required to be transmitted through the water, it can be expected that better efficiency will derive from the small but more uniform movement over a large surface area (afforded by the present invention) by comparison with a large movement over a small surface area (prior art transducer). It is to be understood however that the flexible diaphragm need not be cylindrical and may, for example, be conical, frusto-conical, toroidal or spheroidal (e.g. spherical or part spherical) in shape.

A further advantage of the transducer of the present invention is that the pressure within the transducer may be kept above the ambient pressure of the seawater. If the diaphragm is pre-pressurized and a hydraulically operated piston within the transducer is used to cause expansion and contraction of the diaphragm, only one supply is required, the external pressure being used to effect the return stroke of the piston.

Embodiments of marine seismic transducers according to the present invention will now be described by way of example only by reference to the accompanying drawings, in which:

Fig. 1 shows a schematic cross-section of a marine seismic transducer; and

Fig. 2 shows a schematic cross-section of a marine seismic transducer employing a different hydraulic arrangement to that of Fig. 1.

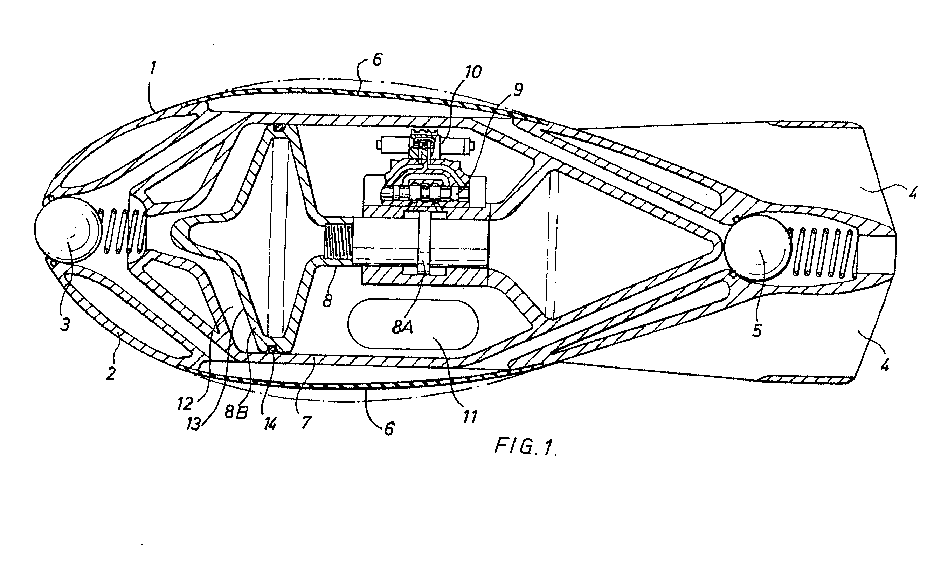

Referring to Fig. 1 of the drawings a marine seismic transducer 1 comprises a streamlined outer casing 2, provided at its front end with a spring-loaded one-way valve 3 and at its rear end with guide fins 4 and a further spring-loaded one-way valve 5. A generally cylindrical sleeve 6 of flexible material e.g. rubber or neoprene, forms part of the outer surface of the transducer 1 and is secured to the outer casing 2 at the peripheries of the sleeve 6.

Within the transducer 1 there is provided a cylinder 7 and a lightweight double piston 8 (formed from e.g. duralumin). The double piston 8 comprises two axially arranged pistons 8A and 8B, piston 8A being a high pressure, small surface area piston acted upon by hydraulic fluid and piston 8B being a low pressure large surface area piston acting upon seawater within the transducer 1. Any suitable circuitry may be employed to reciprocate the piston 8 within the cylinder 7; in the arrangement shown a hydraulic main valve 9 is employed, operated by hydraulic fluid (e.g. oil or water) supplied from an external source not shown. The main valve 9 controls the movement of piston 8A which piston is itself a double sided piston each side being of equal surface area. The hydraulic main valve 9 is controlled by an electrically operated pilot valve 10. A return line (also not shown) is provided to return the hydraulic fluid to the source. The space behind the piston 8 is filled with air at ambient or above ambient pressure (to balance or to pre-pressurize the diaphragm 6 and to act as a cushion for the return stroke of the piston 8) supplied by an air line from a low pressure compressor. Accumulators for damping surge during charge and discharge of the cylinder are provided one of which, the discharge accumulator, is shown at 11. The accumulators have the effect of smoothing the output at low frequencies and of absorbing excess energy at high pressures. Sealing means 14 are provided about the periphery of piston 8B to ensure sealed sliding engagement between cylinder 7 and piston 8B.

The transducer operates as follows. Water is caused to fill a chamber 12 which communicates with the inner surface of sleeve 6. The working surface 13 of piston 8B is thus able to act upon the water chamber 12. Upon actuation of the pilot valve 10, main valve 9 acts upon piston 8A to allow hydraulic fluid to advance the piston rapidly (to the left in the drawing) thus causing a pulse of high pressure in the water in chamber 12. This pulse causes the flexible sleeve 6 to expand and to transmit a sound pulse into the water surrounding the transducer 1. The return stroke of piston 8 is effected by means of main valve 9 and may be assisted by utilizing ambient pressure and the contraction of sleeve 6. Valve 3 can be employed to fill the transducer upon its being lowered in the water, whilst valve 5 acts as an emergency relief valve in case of excessive pressures within the transducer. It is envisaged that by suitable selection of spring strengths in valves 3 and 5 the transducer could be rendered self-propelled, the action of piston 8 causing periodic ingress and egress of water respectively through valves 3 and 5.

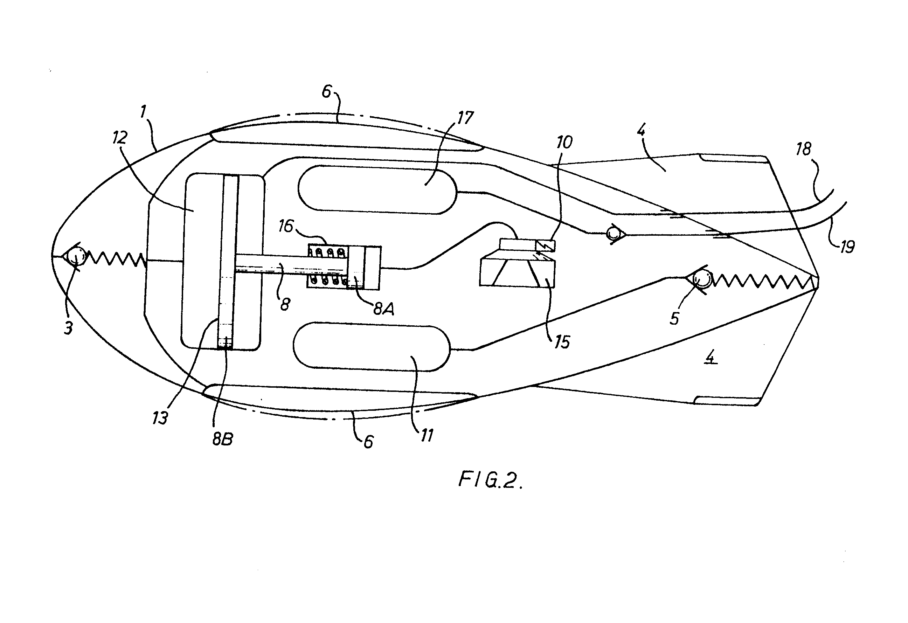

In the alternative embodiment shown in Fig. 2 of the accompanying drawings (in which parts corresponding to those in Fig. 1 are correspondingly designated), a different hydraulic arrangement is employed from that of Fig. 1. An electrically operated pilot valve 10 operates a three way hydraulic valve 15. This valve 15 supplies high pressure hydraulic fluid to one side only of piston 8A; in other words, the valve 15 is capable of driving piston 8A in one direction only. The return stroke of the double piston 8 is effected by the external water pressure, by contraction of the flexible sleeve 6 from its momentarily expanded state and by means of coil spring 16. The hydraulic fluid which acts upon piston 8A is discharged via the three way valve 15 either to a return line or, if the hydraulic fluid is seawater, directly into the sea. It will be observed that in addition to the discharge accumulator 11, a charge accumulator 17 is shown as well as air supply line 18 and high pressure seawater supply line 19.

Arrangements which may be adapted for use in the transducer of the present invention are those described in the specifications of our copending Patent Applications Nos. 8401171 and 8420907, the contents of which are incorporated herein by reference.

It is envisaged that the transducer of the present invention be capable of operating at frequencies from about 10 Herz up to approximately 200 Hertz and that the frequency be swept up or down during operation. The amplitude of the sound transmitted by the transducer of the present invention is satisfactory for use as a siesmic vibration source.

By means of the present invention therefore it will be seen that the following benefits may be derived:

1.       Smaller size and volume to move same mass  of water.

2.       Better streamlining therefore less chance of cavitation and greater efficiency.

0189333

- 6 -

3.   More uniform movement of the active part with less concentration of water flow at edges of moving parts (sleeve moves less at ends than in middle).

4.   Sleeve can be preloaded by internal pressure in excess of ambient pressure to determine the initial and final positions of the sleeve.

5.   Less drag due to better streamlining.

The invention may be performed otherwise than as has been described and all modifications and improvements which would be apparent to one skilled in the art fall within the scope of the present invention.

CLAIMS:

1. A marine seismic transducer in which there is provided a vibration source which comprises a flexible sound-transmitting diaphragm which is arranged to act directly upon the water to which the sound is to be transmitted.

2. A transducer according to claim 1, in which said diaphragm is in the form of a generally cylindrical sleeve, the edges of the sleeve being secured to a body of the transducer.

3. A transducer according to claim 1, in which said diaphragm is of generally conical, frusto-conical, toroidal or pheroidal form.

4. A transducer according to any preceding claim, which in use is adapted to be pressurized internally to a pressure equal to or greater than the ambient pressure of surrounding sea water.

5. A transducer according to claim 4, wherein means are provided for internally pressurizing the transducer with air.

6. A transducer according to any preceding claim, wherein hydraulic means are provided to cause flexure of said diaphragm.

7. A transducer according to claim 6, wherein said hydraulic means comprise a hydraulically operable piston.

8. A transducer according to claim 7, wherein said means comprise a hydraulically operable double piston.

9.    A transducer according to any preceding claim, which is provided with propulsion means.

10.    A marine seismic transducer, substantially as hereinbefore described and with reference to Fig. 1 of the drawings.

11.    A marine seismic transducer, substantially as hereinbefore described and with reference to Fig. 2 of the accompanying drawings.

12.    The features hereinbefore disclosed, or their equivalents, in any novel selection.

FIG.1.

FIG.2.